# EUROPEAN PATENT APPLICATION

(11) **EP 4 671 120 A1**
(43) Date of publication of application: **31.12.2025**
(21) Application number: 25184747.1
(22) Date of filing: 24.06.2025
(51) Int. Cl.: B64C 1/14

(54) **A DRAINAGE LINE APPARATUS**

(30) Priority: 28.06.2024 TR 2024008305
(71) Applicant: Tusas- Turk Havacilik Ve Uzay Sanayii Anonim Sirketi, 06980 Ankara (TR)
(72) Inventor: OZDEMIR, SONER, 06980 ANKARA (TR); TEKKANAT, KAZIM, 06980 ANKARA (TR)
(74) Representative: Berkkam, Ayfer

(57) **Abstract**

The present invention comprises a body (G) located on the aircraft, at least one engine (E) located in the body (G) which provides propulsion to the aircraft, at least one fluid (A) which is driven by the operation of the engine (E), extending along the length between the engine (E) and the body (G), at least one drainage pipe (2) connected at one end to the engine (E) and at the other end to the body (G), allowing fluid (A) from the engine (E) to discharge out of the body (G), a first part (201) forming the drainage pipe (2) and connected to the engine (E), It relates to a second part (202) connected to the body (G), which at least partially encircles the first part (201), thereby enabling telescopic movement of the first part (201) within it, and at least one spring (3) located on the second part (202), which enables the first part (201) and the second part (202) to be movably positioned between the engine (E) and the body (G), thereby holding the first part (201) and the second part (202) together against the fluid (A).

## Description

This invention relates to a drainage line apparatus for the transfer of fluids in aircraft.

In aircraft, there are apparatus located between the engine and the body, in which the fluid is contained and the fluid is discharged outside the body. The drainage lines used for the discharge of engine oil waste in aircraft are usually located at the bottom of the engine. These lines are designed to discharge excess oil from the engine oil system out of the engine. Functionally, these drainage lines are used to prevent oil from accumulating when the engine is running or when the engine is cooled. Drain lines are usually pipes or tubes designed to safely discharge oil from the engine oil tank or oil collection areas on the bottom of the engine to the outside environment. These lines are usually located on the underside of the aircraft and under the engines, and are usually done when the aircraft is parked or during maintenance.

In the Chinese patent document numbered CN210344672U, which is included in the known state of the art, the metal crimped expansion joint is mentioned. Both ends of the bellows are all welded, all overlapping and equipped with the support part, the two overturning outer walls equipped with the pull rod, the equal distance is ring-shaped and distributed between the two support parts, two of which take over and all of them are equipped with an annular protruding edge near the bellows at one end, and the other two take over one end and keep it away from the bellows, and all of them are equipped with the flange ring, the support welded assembly is equipped with a honeycomb channel. One end of the honeycomb channel is equipped with an expansion section, and the edge of the expansion section passes through the bolt connection, one of which welds the takeover inner wall and the other takeover inner wall welds the fender ring. The utility model is suitable for promoting the stability of the expansion joint, improving the horizontal shock resistance, combining the more durable second spring part on the installing pull rod, improving the anti deformability of the expansion joint.

The Chinese patent document numbered CN109058641A, which is included in the state of the art, mentions an axial crimped expansion joint. The invention discloses a type of axial expansion bellows, including outer cover, bellows, inner stationary cylinder, inner retracting cylinder, secondary sealing ring, first deflection ring, coarse spring, deflection rings, airtight and watertight filling, second deflection ring. The flange and the second flange of the present invention, the YC type expansion bellows in the axial direction has good compensation performance, the structure is simple, the performance stabilization and triple compound seal performances, the bellows, the protection ring has tempered rigidity softly, and can protect the service life of the bellows, prevent overcompensation of displacements. The bellows type expansion amount function prevents over-compensation, further improving machine life performance. The complete machine combines the sealing advantage of flexible connection and sleeve expansion joint, and the pipeline nose balance can be applied with ease of installation.

A drainage line apparatus developed with this invention allows waste oil from the engine to be discharged outside the aircraft.

Another aim of this invention is to provide flexibility at the engine interface by connecting to the body to eliminate the differences between the aircraft structure and the engine due to dynamic movements and thermal expansions. The telescopic part of the invention is designed to provide flexibility for maintenance and disassembly/assembly.

A further object of the present invention is to provide a more efficient and practical way of assembling the drainage line apparatus.

The drainage line apparatus defined in the first claim and the claims dependent on this claim, which are realized to achieve the purpose of the invention, comprises a body which is an aircraft, at least one engine located inside the body and which enables the aircraft to move, and a fluid which can be liquid or gas that is moved by the movement of the engine. There is a drainage pipe located between the engine and the body, which allows the fluid taken from the engine to be transferred outside the body. The drainage pipe consists of a first part and a second part which are intertwined. The first part can move telescopically up and down in the second part in a single direction. There is a spring that compresses the first part in the second part and dampens the impact force against the rapid impact of the fluid and ensures that the first part and the second part are together.

The inventive drainage line apparatus comprises a first lug perpendicular to the direction of the first part towards the outside of the first part. The second part has a second lug extending outwardly from the second part, perpendicular to the direction in which the second part extends. The first part is rotated around its axis and compressed against the spring. As the first part compresses the spring and telescopic movement of the first part in the second part, the first lug is located opposite to the second lug. In this way, the first lug and the second lug are clamped and fixed, shortening the length of the drainage pipe and making it easy to assemble.

In one embodiment of the invention, the drainage line apparatus is rotated in such a way that the first lug is opposite the second lug, and the first lug is fixed with the second lug. In this way, the size of the drainage pipe is reduced and ease of installation is provided. In an embodiment of the invention, the drainage line apparatus comprises tabs on the first part and the second part, extending perpendicular to the first part and the second part over the first lug and the second lug, and designed to interlock with each other. By means of the tabs, the first lug and the second lug are interlocked with each other so that the first part remains fixed in the second part.

In one embodiment of the invention, the drainage line apparatus comprises a first lug and a second lug rotatably engaged with each other along the drainage pipe. The first lug and the second lug are positioned so as to remain transverse to each other. The user rotates the first part within the second part and presses the first part against the second part.

In one embodiment of the invention, the drainage line apparatus comprises a first position (I) in which the spring is in a free state and a second position (II) in which the first lug is engaged with the second lug, the first part being pressed against the second part, whereby the spring stores energy.

In one embodiment of the invention, the drainage line apparatus is provided wherein the first part is located in the second part, the diameters of the first part being different from each other.

In one embodiment of the invention, the drainage line apparatus comprises a gasket. The gasket is located between the first part and the second part to prevent leakage of fluid from the engine out of the drainage pipe.

In one embodiment of the invention, the drainage line apparatus comprises a flange extending outwardly on the second part parallel to the body, whereby the drainage pipe is connected to the body.

In one embodiment of the invention, the drainage line apparatus comprises holes in the flange at user predetermined intervals. In this way, the holes enable the drainage pipe to be connected to the body by means of screws.

In one embodiment of the invention, the drainage line apparatus comprises a funnel having a spout which expands progressively towards the engine for removing fluid from the engine towards the outside of the body.

The drainage line apparatus for achieving the object of the present invention is shown in the accompanying figures;
- Figure 1 -: Schematic view of the drainage line.
- Figure 2 -: Schematic view of the drainage line.

The parts in the figures are numbered one by one and the corresponding numbers are given below.
- 1.: Drain Line Apparatus
- 2.: Drain Pipe
201. First Part
202. Second Part
- 3.: Spring
- 4.: First Lug
- 5.: Second Lug
- 6.: Gasket
- 7.: Flange
- 8.: Hole
- 9.: Funnel
- (G): Body
- (E): Engine
- (A): Fluid
(I) First Position
(II) Second Position

The drainage line apparatus (1) comprises a body (G) located on the aircraft, at least one engine (E) located in the body (G) providing thrust to the aircraft, at least one fluid (A) driven by the operation of the engine (E), extending along the length between the engine (E) and the body (G), at least one drainage pipe (2) connected at one end to the engine (E) and at the other end to the body (G), allowing fluid (A) from the engine (E) to drainage out of the body (G), a first part (201) forming the drainage pipe (2) and connected to the engine (E), a second part (202) in connection with the body (G), at least partially enclosing the first part (201) and allowing telescopic movement of the first part (201) therein, and at least one spring (3) located on the second part (202), which allows the first part (201) and the second part (202) to be movably positioned between the engine (E) and the body (G), thereby holding the first part (201) and the second part (202) together against the fluid (A).

The inventive drainage line apparatus (1) comprises at least one first lug (4) extending outwardly from the first part (201) in the form of a projection on the first part (201), the second part (202) extending outwardly from the second part (202) in the form of a projection, at least one second lug (5), which is removably interlocked with the spring (3) of the first part (201) and the first lug (4) in such a way that the first part (201) and the second part (202) are fixed between the body (G) and the engine (E) in such a way as to realize efficient fluid (A) discharge.

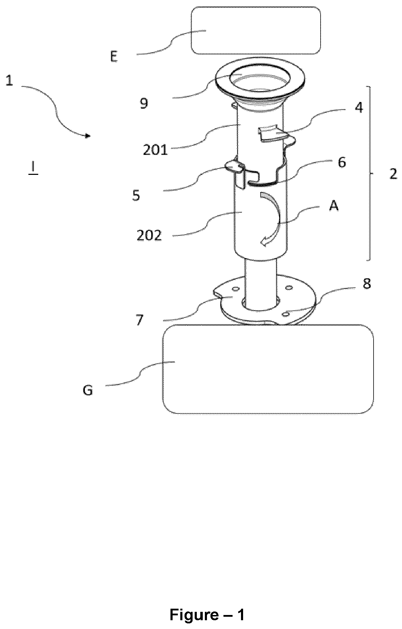

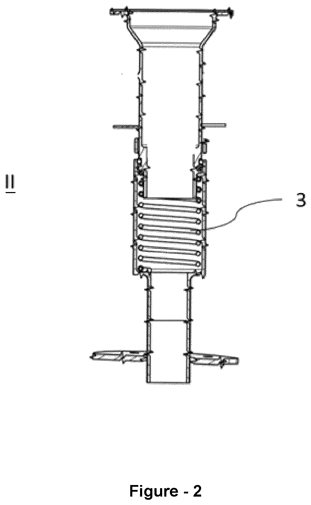

A body (G) on an aircraft is a system comprising at least one engine (E) and at least one fluid (A) driven by the engine (E). There is a drainage pipe (2) extending between the said engine (E) and the body (G). This drainage pipe (2) is connected at one end to the engine (E) and at the other end to the body (G) and allows the fluid (A) coming from the engine (E) to be discharged out of the body (G). The drainage pipe (2) comprises a first part (201) connected to the engine (E) and supported by a second part (202) which at least partially surrounds the first part (201) connected to the body (G), allowing it to telescope. The second part (202) is movable between the engine (E) and the body (G), whereby the first part (201) and the second part (202) are held together against the fluid (A) by at least one spring (3) (Figure 1, Figure 2).

The drainage line apparatus (1) is designed to ensure efficient fluid (A) drainage between the engine (E) and the body (G). The apparatus consists of two main components, the first part (201) and the second part (202). The first part (201) comprises one or more first lug (4), said first lug (4) projecting outwardly from the first part (201). The second part (202) has one or more second lug (5), said lug protrude outwardly from the second part (202) and are removably engaged with the first lug (4) with the spring (3). The first part (201) and the second part (202) are secured between the engine (E) and the body (G). The spring (3) ensures that the second lugs (5) are mutually engaged with the first lugs (4), so that the drainage pipe (2) is held stably. In this way, the fluid (A) generated during the operation of the engine (E) is efficiently discharged out of the body (G) through the drainage pipe.

In one embodiment of the invention, the drainage line apparatus (1) comprises a spring (3) located between the first part (201) and the second part (202), which allows the first part (201) to be rotated around its axis in the second part (202), thereby enabling the first lug (4) to engage with the second lug (5) and thereby to assemble the drainage pipe (2). In this way, the first part (201) is compressed towards the second part (202) by means of the spring (3) and the size of the drainage pipe (2) is reduced.

In one embodiment of the invention, the drainage line apparatus (1) comprises a first lug (4) and a second lug (5) extending outwardly from the first part (201) and the second part (202), which can be engaged with each other by means of a tab located on the lugs. In this way, the first lug (4) and the second lug (5) are almost completely locked together.

In one embodiment of the invention, the drainage line apparatus (1) comprises a first lug (4) and a second lug (5) positioned along the drainage pipe (2) so as to be substantially completely transverse to each other, one of which is rotated about its axis so as to be opposite to the other, thereby providing locking. When the first part (201) is rotated about its axis, the first lug (4) and the second lug (5) move to the second position (II), which is opposed to each other.

In one embodiment of the invention, the drainage line apparatus (1) comprises a first position (I) in which the spring (3) is in a free state, and a second position (II) in which the spring (3) stores energy by rotating the first lug (4) in the second lug (5). The spring (3) is moved from the first position (I) to the second position (II) by compressing the first part (201) against the second part (202).

In one embodiment of the invention, the drainage line apparatus (1) comprises a first part (201) and a second part (202) having diameters different from each other, the first part (201) at least partially located inside the second part (202). In this way, the first part (201) and the second part (202) can be located within each other and telescopically movable.

In one embodiment of the invention, the drainage line apparatus (1) comprises at least one gasket (6) arranged provide sealing between the first part (201) and the second part (202) so as to surround the first part (201). This prevents fluid (A) from leaking out of the drainage pipe (2).

In one embodiment of the invention, the drainage line apparatus (1) comprises at least one flange (7) on the second part (202) for connecting the drainage pipe (2) to the body (G). In this way, the drainage pipe (2) is fixed to the body (G).

In one embodiment of the invention, the drainage line apparatus (1) comprises at least one hole (8) in the flange (7) at intervals predetermined by the manufacturer along the radial direction, allowing the drainage pipe (2) to be fixed to the body (G) by means of fasteners. Through the holes (8), the drainage pipe (2) is fixed to the body (G) by means of fasteners.

In one embodiment of the invention, the drainage line apparatus (1) comprises at least one funnel (9) in expanding form at the end of the first part (201) where it is connected to the engine (E), for conveying fluid (A) from the engine (E) to the drainage pipe (2). In this way, the fluid (A) from the engine (E) is transferred to the drainage pipe (2).

## Claims

1. A drainage line apparatus (1), **comprising** a body (G) located on the aircraft, at least one engine (E) located in the body (G), providing thrust to the aircraft, at least one fluid (A) driven by the operation of the engine (E), at least one discharge pipe (2) extending between the engine (E) and the body (G), connected to the engine (E) at one end and to the body (G) at the other end, allowing the fluid (A) from the engine (E) to drainage out of the body (G), a first part (201) forming the discharge pipe (2) and connected to the engine (E), a second part (202) connected to the body (G), which at least partially encircles the first part (201) and enables telescopic movement of the first part (201) therein, at least one spring (3) located on the second part (202), which allows the first part (201) and the second part (202) to be movably positioned between the engine (E) and the body (G), thereby holding the first part (201) and the second part (202) together against the fluid (A), **characterized by** at least one first lug (4) located on the first part (201), projecting outwardly from the first part (201), at least one second lug (5) located on the second part (202), extending outwardly from the second part (202) in the form of a projection, which engages with the spring (3) of the first part (201) with the first lug (4) in a reciprocal and removable manner, thereby enabling the first part (201) and the second part (202) to be fixed between the body (G) and the engine (E) in such a way as to realize efficient fluid (A) drainaging.

2. A drainage line apparatus (1) as in claim 1, **characterised by** the first part (201) is arranged between the first part (201) and the second part (202), the first part (201) being rotated about its axis in the second part (202), the first lug (4) engaging the second lug (5), and the spring (3) enabling the drainage pipe (2) to be mounted.

3. A drainage line apparatus (1) as in claim 1 or claim 2, **characterised by** a first lug (4) and a second lug (5) extending outwardly from the first part (201) and the second part (202), the first lug (4) and the second lug (5) being interlockable with each other by means of a tab located on them.

4. A drainage line apparatus (1) as in any one of the preceding claims, **characterised by** a first lug (4) and a second lug (5) positioned along the drainage pipe (2) so as to be substantially diagonal to each other, one of which is rotated about its axis so as to be opposite to the other, thus ensuring locking.

5. A drainage line apparatus (1) as in any one of the preceding claims, **characterised by** a first position (I) in which the spring (3) is in a free state, and a second position (II) in which the spring (3) stores energy by rotating the first lug (4) in the second lug (5).

6. A drainage line apparatus (1) as in any one of the preceding claims, **characterised by** the first part (201) and the second part (202) differ in diameter, the first part (201) at least partially located inside the second part (202).

7. A drainage line apparatus (1) as in any one of the preceding claims, **characterised by** there is at least one gasket (6) located between the first part (201) and the second part (202), so as to surround the first part (201).

8. A drainage line apparatus (1) as in any one of the preceding claims, **characterised by** at least one flange (7) on the second part (202) for connecting the drainage pipe (2) to the body (G).

9. A drainage line apparatus (1) as in claim 8, **characterised by** at least one hole (8) in the flange (7) at intervals predetermined by the manufacturer along the radial direction, which allows the drainage pipe (2) to be fixed to the body (G) by means of fasteners.

10. A drainage line apparatus (1) as in any one of the preceding claims, **characterised by** at least one funnel (9) in an expanding form at the end of the first part (201) where it is connected to the engine (E), for conveying the fluid (A) from the engine (E) to the drainage pipe (2).
